# EUROPÄISCHE PATENTSCHRIFT

(11) **EP 1 147 041 B1**
(45) Veröffentlichungstag und Bekanntmachung des Hinweises auf die Patenterteilung: **04.05.2005**
(21) Anmeldenummer: 00989874.3
(22) Anmeldetag: 23.11.2000
(51) Int. Cl.: B62D 5/06

(54) **ABSCHNEIDVENTIL FÜR HILSFSKRAFTLENKUNGEN, INSBESONDERE FÜR KRAFTFAHRZEUGE**
CUT-OFF VALVE FOR POWER STEERING SYSTEMS, ESPECIALLY FOR AUTOMOBILES
VALVE DE COUPURE DESTINEE A DES DIRECTIONS ASSISTEES NOTAMMENT DE VEHICULES AUTOMOBILES

(30) Priorität: 25.11.1999 DE 19956858
(43) Veröffentlichungstag der Anmeldung: 24.10.2001
(73) Patentinhaber: ZF Lenksysteme GmbH, 73527 Schwäbisch Gmünd (DE)
(72) Erfinder: FAHRIAN, Matthias, 73566 Bartholomä (DE); SCHÖFFEL, Jörgen, 73527 Schwäbisch Gmünd (DE)
(86) Internationale Anmeldenummer: PCT/EP2000/011674
(87) Internationale Veröffentlichungsnummer: WO 2001/038159

(56) Entgegenhaltungen:
- DE-A- 4 216 053
- GB-A- 2 183 571

## Beschreibung

Die Erfindung betrifft ein Abschneidventil für Hilfskraftlenkungen, insbesondere für Kraftfahrzeuge, zur Begrenzung eines Druckes in wenigstens einem Druckraum, nach dem Oberbegriff des Anspruches 1. In dem Abschneidventil ist ein gegen die Kraft einer Feder verstellbarer Kolben und eine feste Drosselstelle enthalten, die in einer Verbindungsleitung zwischen dem mit einem ersten Druck beaufschlagten Druckraum und einem mit einem zweiten Druck beaufschlagten Druckraum angeordnet ist.

Ein derartiges Abschneidventil ist bekannt aus der DE-A1-42 16 053. Bei einem nach dieser Patentanmeldung ausgestalteten Abschneidventil können Toleranzen des Ansprechdruckes des Abschneidventils nahezu vollständig vermieden werden. Außerdem können dadurch Fertigungstoleranzen des Abschneidventils ausgeschaltet und weitere Toleranzen anderer Lenkungsteile kompensiert werden.

Die dort angegebenen Maßnahmen haben jedoch keinen Einfluß auf die Breite des Toleranzfeldes der Ventilkennlinien. Die Hysterese der Ventilkennlinien bei Verwendung des bekannten Abschneidventils ist für manche Anwendungsfälle zu groß.

Der Erfindung liegt die Aufgabe zugrunde, das Abschneidventil derart zu verbessern, daß die Breite des Toleranzfeldes der Ventilkennlinien wenigstens auf die Hälfte reduziert werden kann.

Diese Aufgabe wird durch das in den Ansprüchen 1 und 4 gekennzeichnete Abschneidventil gelöst. Mit der Veränderung des Querschnittes der Drosselstelle kann die Toleranzfeldbreite bzw. die Breite der Hysterese der Ventilkennlinien verkleinert werden, so daß sie nur noch etwa die Hälfte beträgt.

Zweckmäßige und vorteilhafte Ausgestaltungen der Erfindung sind in den Unteransprüchen angegeben.

Der Querschnitt der Drosselstelle ist stufenlos einstellbar oder auch in mehreren Stufen. Eine stufenlose Einstellung läßt sich besonders einfach vornehmen, wenn die Drosselstelle durch eine Bohrung gebildet ist, deren Querschnitt beispielsweise durch eine Stellschraube oder einen Stellkörper einstellbar ist, deren Achse im wesentlichen senkrecht zu der Achse der Bohrung liegt. In diesem Fall wird der Querschnitt der Bohrung dadurch eingestellt, daß die Stellschraube mehr oder weniger tief eingeschraubt wird.

Eine gestufte Einstellbarkeit des Querschnittes der Drosselstelle läßt sich durch folgende Merkmale darstellen: Die Drosselstelle ist durch eine von mehreren Drosselbohrungen gebildet, die an einem verdrehbaren, zylindrischen Stellkörper in einer Ebene in einer bestimmten Winkelteilung angeordnet sind und unterschiedliche Querschnitte aufweisen. Die eine der Drosselbohrungen wirkt mit einer gehäusefesten größeren Bohrung zusammen, während die anderen Drosselbohrungen abgesperrt sind. Und schließlich ist die eine der Drosselbohrungen in der Verbindungsleitung zwischen dem Rückwirkungsraum und dem Rücklauf zu dem Behälter angeordnet. Aus Fertigungsgründen sind die Drosselbohrungen an dem verdrehbaren Stellkörper zweckmäßigerweise in einer Ebene unter gleichen Winkeln angeordnet.

Im folgenden wird die Erfindung anhand zweier in der Zeichnung dargestellter Ausführungsbeispiele näher erläutert.
Es zeigen:
- Fig. 1: eine Ventilkennlinie einer Hilfskraftlenkung mit einem Abschneidventil nach dem Stand der Technik;
- Fig. 2: eine Ventilkennlinie einer Hilfskraftlenkung mit einem erfindungsgemäßen Abschneidventil;
- Fig. 3: eine schematische Darstellung einer Hilfskraftlenkung mit einem Längsschnitt durch das erfindungsgemäße Abschneidventil in einem ersten Ausführungsbeispiel;
- Fig. 4: einen Längsschnitt durch das erfindungsgemäße Abschneidventil in einem zweiten Ausführungsbeispiel und
- Fig. 5: einen Querschnitt durch das erfindungsgemäße Abschneidventil nach der Linie V-V in Fig. 4.

Von einer Hilfskraftlenkung, in der das erfindungsgemäße Abschneidventil eingebaut ist, ist nur eine Druckmittelquelle 1, ein Rückwirkungsraum 2 und ein Behälter 3 dargestellt. Weitere Teile der Hilfskraftlenkung, deren Kenntnis jedoch zum Verständnis der vorliegenden Erfindung nicht erforderlich ist, können beispielsweise aus der DE-A1-42 16 053 entnommen werden. Für die Erfindung wesentlich ist das Vorhandensein von zwei Druckräumen, die mit unterschiedlichen Drücken beaufschlagt sind. Dabei ist der eine Druckraum der Rückwirkungsraum 2 und der zweite Druckraum der Behälter 3.

Das Abschneidventil 4 enthält in einem Ventilgehäuse 5 einen Schließkörper 6, der durch die Kraft einer Feder 7 in seine Schließstellung beaufschlagt wird.

Durch den Schließkörper 6 ist eine direkte Verbindung von dem Rückwirkungsraum 2 zu dem Behälter 3 abgesperrt. Diese Verbindung enthält eine Leitung 8, die zwischen dem Rückwirkungsraum 2 und dem Ventilgehäuse 5 angeordnet ist. Die Leitung 8 mündet in eine Ringnut 10 des Ventilgehäuses 5, die über mehrere Bohrungen 11 mit einem Innenraum 12 des Ventilgehäuses 5 verbunden ist. Die Verbindung zwischen dem Rückwirkungsraum 2 und dem Behälter 3 setzt sich fort durch einen Federraum 13 und eine Leitung 14.

Das Abschneidventil 4 ist nach dem Prinzip der Druckwaage aufgebaut. Dazu wird der Schließkörper 6 auf seinen beiden Stirnseiten durch unterschiedliche Drücke beaufschlagt. Die in dem Federraum 13 liegende Stirnfläche des Schließkörpers 6 ist mit dem Rücklaufdruck aus dem Behälter 3 beaufschlagt. Die in dem Innenraum 12 des Ventilgehäuses 5 liegende Stirnfläche des Schließkörpers 6 ist mit einem Druck beaufschlagt, der zwischen den Drücken des Rückwirkungsraumes 2 und des Behälters 3 liegt. Um diesen Druck in dem Innenraum 12 zu erhalten, ist zwischen dem Innenraum 12 und dem Behälter 3 eine Drosselstelle 15 angeordnet, die über eine Leitung 16 mit dem Behälter 3 verbunden ist. Der Querschnitt der Drosselstelle 15 ist einstellbar.

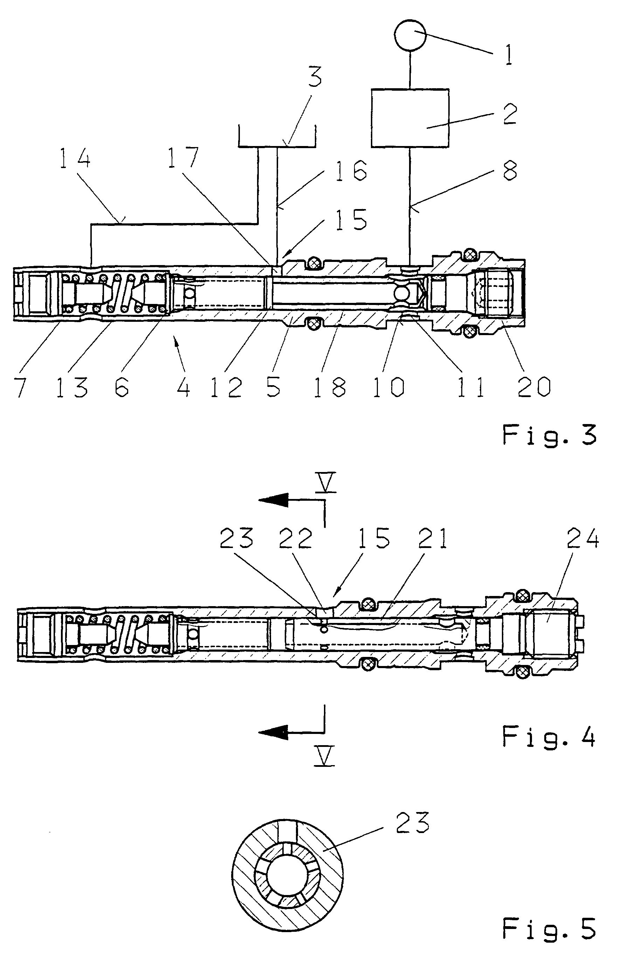

In dem Ausführungsbeispiel nach Fig. 3 kann die Drosselstelle 15 dadurch eingestellt werden, daß die Drosselstelle 15 durch eine Bohrung 17 in dem Ventilgehäuse 5 gebildet ist, deren Querschnitt durch einen in dem Innenraum 12 eingesetzten Stellkörper 18 verändert werden kann. In dem Ausführungsbeispiel der Fig. 3 ist der Stellköprer 18 als Stellschraube ausgebildet, die über ein Gewinde 20 in ihrer axialen Position verstellt werden kann. In Fig. 3 ist der Stellkörper 18 in einer Stellung dargestellt, in der die Bohrung 17 ganz abgesperrt ist. Dadurch ist der Querschnitt der Drosselstelle 15 gleich Null. Durch Herausdrehen des Stellkörpers 18 in seinem Gewinde 20 kann der Querschnitt der Drosselstelle 15 vergrößert werden. Dadurch kann die Toleranzfeldbreite der Ventilkennlinien sehr genau eingestellt und reduziert werden.

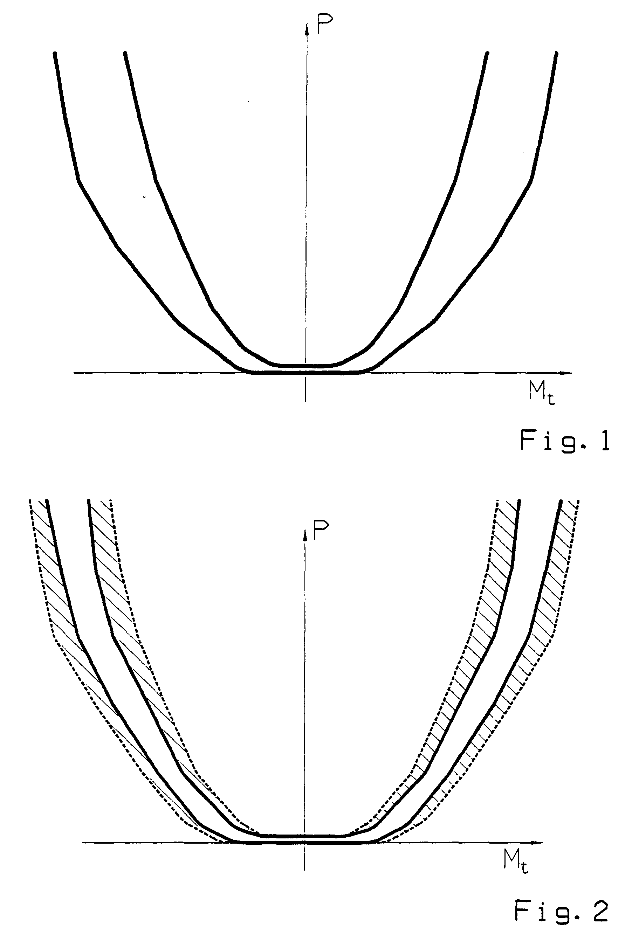

Die Toleranzfeldbreite, die mit dem erfindungsgemäßen Abschneidventil erreicht werden kann, ist in Fig. 2 dargestellt. Dort ist die Toleranzfeldbreite der Ventilkennlinien um den schraffierten Bereich kleiner als die Toleranzfeldbreite eines Abschneidventils nach dem Stand der Technik, die in Fig. 1 dargestellt ist.

Bei dem Ausführungsbeispiel nach Fig. 3 ist die Drosselstelle 15 stufenlos einstellbar. Im Gegensatz dazu ist bei dem Ausführungsbeispiel nach Fig. 4 die Drosselstelle 15 in mehreren Stufen einstellbar. Mit dieser Ausführung ist es möglich, Drosselquerschnitte, die als besonders vorteilhaft erkannt wurden, fest in einem Stellkörper 21 anzubringen. In diesem Fall wird in dem Ventilgehäuse 5 eine Bohrung 22 mit größerem Durchmesser vorgesehen. Mit dieser Bohrung 22 kann eine von mehreren in dem Stellkörper 21 angeordneten Drosselbohrungen 23 in Verbindung gebracht werden. Die Drosselbohrungen 23 sind in dem Stellkörper 21 in einer Ebene in einer bestimmten Winkelteilung angeordnet. Zweckmäßigerweise wird eine gleichmäßige Winkelteilung gewählt. Die Drosselbohrungen 23 weisen unterschiedliche Durchmesser auf. Der Stellkörper 21 kann derart verdreht werden, daß jeweils eine der Drosselbohrungen 23 mit der Bohrung 22 in Verbindung gebracht wird. Nach einer solchen Einstellung kann der Stellkörper 21 durch eine Feststellschraube 24 fixiert werden.

Wird an die Bohrung 17 bzw. 22 anstelle des Behälters 3 die Druckmittelquelle 1 direkt oder indirekt angeschlossen, so wirkt die Drosselstelle 15 als Vorsteuerdrossel, über die der Druck in dem Rückwirkungsraum 2 eingestellt werden kann. Damit läßt sich die Lage der Ventilkennlinie im Toleranzband beeinflussen, in entsprechender Weise wie bei den Ausführungsbeispielen der Fig. 3 und 4.

### Bezugszeichen

- 1: Druckmittelquelle
- 2: Rückwirkungsraum
- 3: Behälter
- 4: Abschneidventil
- 5: Ventilgehäuse
- 6: Schließkörper
- 7: Feder
- 8: Leitung
- 9: -
- 10: Ringnut
- 11: Bohrung
- 12: Innenraum
- 13: Federraum
- 14: Leitung
- 15: Drosselstelle
- 16: Leitung
- 17: Bohrung
- 18: Stellkörper
- 19: -
- 20: Gewinde
- 21: Stellkörper
- 22: Bohrung
- 23: Drosselbohrung
- 24: Feststellschraube

## Patentansprüche

1. Abschneidventil für Hilfskraftlenkungen, insbesondere für Kraftfahrzeuge, mit einer Druckmittelquelle (1), einem ersten Druckraum (2) und einem Behälter (3), zur Begrenzung eines Druckes in wenigstens einem Druckraum, mit einem gegen die Kraft einer Feder (7) verstellbaren Schließkörper (6) und mit einer Drosselstelle (15), die in einer Verbindungsleitung zwischen dem mit einem ersten Druck beaufschlagten ersten Druckraum (2) und einem mit einem zweiten Druck beaufschlagten Druckraum (3) angeordnet ist,
**dadurch gekennzeichnet** durch folgende Merkmale:
• der Querschnitt der Drosselstelle (15) ist ohne Demontage von außen einstellbar;
• die Drosselstelle (15) ist durch eine Bohrung (17) gebildet ist, deren Querschnitt stufenlos einstellbar.

2. Abschneidventil nach Anspruch 1, **dadurch gekennzeichnet, daß** der Querschnitt der Bohrung (17) durch einen Stellkörper (18) einstellbar ist, dessen Achse im wesentlichen senkrecht zu der Achse der Bohrung liegt.

3. Abschneidventil nach Anspruch 2, **dadurch gekennzeichnet, daß** der Stellkörper (18) als Stellschraube ausgebildet ist, die axial verstellbar ist.

4. Abschneidventil für Hilfskraftlenkungen, insbesondere für Kraftfahrzeuge, mit einer Druckmittelquelle (1), einem ersten Druckraum (2) und einem Behälter (3), zur Begrenzung eines Druckes in wenigstens einem Druckraum, mit einem gegen die Kraft einer Feder (7) verstellbaren Schließkörper (6) und mit einer Drosselstelle (15), die in einer Verbindungsleitung zwischen dem mit einem ersten Druck beaufschlagten ersten Druckraum (2) und einem mit einem zweiten Druck beaufschlagten Druckraum (3) angeordnet ist,
**dadurch gekennzeichnet** durch folgende Merkmale:
• der Querschnitt der Drosselstelle (15) ist ohne Demontage von außen einstellbar;
• die Drosselstelle (15) ist durch eine von mehreren Drosselbohrungen (23) gebildet;
• die Drosselbohrungen (23) sind an einem verdrehbaren, zylindrischen Stellkörper (21) in einer Ebene in einer bestimmten Winkelteilung angeordnet und weisen unterschiedliche Querschnitte auf;
• die eine der Drosselbohrungen (23) wirkt mit einer gehäusefesten größeren Bohrung (22) zusammen, während die anderen Drosselbohrungen (23) abgesperrt sind;
• die eine der Drosselbohrungen (23) ist in der Verbindungsleitung zwischen dem mit einem ersten Druck beaufschlagten Druckraum und dem mit einem zweiten Druck beaufschlagten Druckraum angeordnet.

5. Abschneidventil nach Anspruch 4, **dadurch gekennzeichnet, daß** die Drosselbohrungen (23) an dem verdrehbaren Stellkörper (21) in einer Ebene unter gleichen Winkeln angeordnet sind.

6. Abschneidventil nach einem der Ansprüche 1 bis 5, **dadurch gekennzeichnet, daß** der mit einem ersten Druck beaufschlagte Druckraum ein Rückwirkungsraum (2) und der mit einem zweiten Druck beaufschlagte Druckraum der Behälter (3) ist.

7. Abschneidventil nach einem der Ansprüche 1 bis 5, **dadurch gekennzeichnet, daß** der mit einem ersten Druck beaufschlagte Druckraum durch die Druckmittelquelle (1) und der mit einem zweiten Druck beaufschlagte Druckraum durch den Rückwirkungsraum (2) gebildet ist.

## Claims

1. Cut-off valve for power steering systems, in particular for motor vehicles, having a pressure-medium source (1), a first pressure space (2) and a container (3), for limiting a pressure in at least one pressure space, having a closing body (6) which can be displaced counter to the force of a spring (7), and having a throttle point (15) which is arranged in a connecting line between the first pressure space (2) which has a first pressure applied to it and a pressure space (3) which has a second pressure applied to it, **characterized by** the following features:
• the cross section of the throttle point (15) can be adjusted from the outside without disassembly;
• the throttle point (15) is formed by a hole (17) whose cross section is infinitely adjustable.

2. Cut-off valve according to Claim 1, **characterized in that** the cross section of the hole (17) can be adjusted by an adjusting body (18) whose axis lies substantially perpendicular to the axis of the hole.

3. Cut-off valve according to Claim 2, **characterized in that** the adjusting body (18) is configured as an adjusting screw which is axially displaceable.

4. Cut-off valve for power steering systems, in particular for motor vehicles, having a pressure-medium source (1), a first pressure space (2) and a container (3), for limiting a pressure in at least one pressure space, having a closing body (6) which can be displaced counter to the force of a spring (7), and having a throttle point (15) which is arranged in a connecting line between the first pressure space (2) which has a first pressure applied to it and a pressure space (3) which has a second pressure applied to it, **characterized by** the following features:
• the cross section of the throttle point (15) can be adjusted from the outside without disassembly;
• the throttle point (15) is formed by one of a plurality of restrictor bores (23);
• the restrictor bores (23) are arranged on a rotatable, cylindrical adjusting body (21) in one plane in a defined angular pitch and have different cross sections;
• one of the restrictor bores (23) interacts with a larger hole (22) which is fixed to the casing, while the other restrictor bores (23) are closed;
• one of the restrictor bores (23) is arranged in the connecting line between the pressure space which has a first pressure applied to it and the pressure space which has a second pressure applied to it.

5. Cut-off valve according to Claim 4, **characterized in that** the restrictor bores (23) are arranged on the rotatable adjusting body (21) in one plane at identical angles.

6. Cut-off valve according to one of Claims 1 to 5, **characterized in that** the pressure space which has a first pressure applied to it is a reaction space (2), and the pressure space which has a second pressure applied to it is the container (3).

7. Cut-off valve according to one of Claims 1 to 5, **characterized in that** the pressure space which has a first pressure applied to it is formed by the pressure-medium source (1), and the pressure space which has a second pressure applied to it is formed by the reaction space (2).

## Revendications

1. Valve de coupure destinée à des directions assistées, notamment pour véhicules automobiles, comprenant une source de fluide sous pression (1), une première chambre de pression (2) et un récipient (3), pour limiter une pression dans au moins une chambre de pression, avec un corps de fermeture (6) déplaçable à l'encontre de la force d'un ressort (7) et avec un point d'étranglement (15), qui est disposé dans une conduite de connexion entre la première chambre de pression (2) sollicitée par une première pression et une chambre de pression (3) sollicitée par une deuxième pression,
**caractérisée par** les caractéristiques suivantes :
- la section transversale du point d'étranglement (15) peut être ajustée sans démontage depuis l'extérieur ;
- le point d'étranglement (15) est formé par un alésage (17) dont la section transversale peut être ajustée en continu.

2. Valve de coupure selon la revendication 1, **caractérisée en ce que** la section transversale de l'alésage (17) peut être ajustée par un corps de réglage (18) dont l'axe est substantiellement perpendiculaire à l'axe de l'alésage.

3. Valve de coupure selon la revendication 2, **caractérisée en ce que** le corps de réglage (18) est réalisé sous la forme d'une vis de réglage déplaçable axialement.

4. Valve de coupure pour directions assistées, notamment pour véhicules automobiles, comprenant une source de fluide sous pression (1), une première chambre de pression (2) et un récipient (3), pour limiter une pression dans au moins une chambre de pression, avec un corps de fermeture (6) déplaçable à l'encontre de la force d'un ressort (7) et avec un point d'étranglement (15), qui est disposé dans une conduite de connexion entre la première chambre de pression (2) sollicitée par une première pression et une chambre de pression (3) sollicitée par une deuxième pression,
**caractérisée par** les caractéristiques suivantes :
- la section transversale du point d'étranglement (15) peut être ajustée sans démontage depuis l'extérieur ;
- le point d'étranglement (15) est formé par plusieurs alésages d'étranglement (23) ;
- les alésages d'étranglement (23) sont disposés sur un corps de réglage rotatif cylindrique (21) dans un plan suivant une répartition angulaire déterminée et présentent différentes sections transversales ;
- l'un des alésages d'étranglement (23) coopère avec un alésage plus grand (22) fixé au boîtier, tandis que les autres alésages d'étranglement (23) sont bloqués ;
- l'un des alésages d'étranglement (23) est disposé dans la conduite de connexion entre la chambre de pression sollicitée par la première pression et la chambre de pression sollicitée par la deuxième pression.

5. Valve de coupure selon la revendication 4, **caractérisée en ce que** les alésages d'étranglement (23) sont disposés sur le corps de réglage rotatif (21) dans un plan suivant les mêmes angles.

6. Valve de coupure selon l'une quelconque des revendications 1 à 5, **caractérisée en ce que** la chambre de pression sollicitée par la première pression est une chambre de réaction (2) et la chambre de pression sollicitée par une deuxième pression est le récipient (3).

7. Valve de coupure selon l'une quelconque des revendications 1 à 5, **caractérisée en ce que** la chambre de pression sollicitée par la première pression est formée par la source de fluide sous pression (1) et la chambre de pression sollicitée par la deuxième pression est formée par la chambre de réaction (2).
